# EUROPEAN PATENT SPECIFICATION

(11) **EP 4 357 739 B1**
(45) Date of publication and mention of the grant of the patent: **25.06.2025**
(21) Application number: 22203047.0
(22) Date of filing: 21.10.2022
(51) Int. Cl.: G01H 3/12

(54) **METHOD AND A SYSTEM FOR EVALUATING AN EMERGENCY SITUATION IN A VEHICLE**
VERFAHREN UND SYSTEM ZUR BEWERTUNG EINER NOTFALLSITUATION IN EINEM FAHRZEUG
PROCÉDÉ ET SYSTÈME D'ÉVALUATION D'UNE SITUATION D'URGENCE DANS UN VÉHICULE

(43) Date of publication of application: 24.04.2024
(73) Proprietor: Valeo Telematik Und Akustik GmbH, 61381 Friedrichsdorf (DE)
(72) Inventor: Anslinger, Lukas, 94000 Créteil (FR); Bürner, Martin, 94000 Créteil (FR); Klose, Michael, 94000 Créteil (FR)
(74) Representative: Delplanque, Arnaud

(56) References cited:
- WO-A1-2022/046541
- US-A1- 2008 292 146
- US-A1- 2022 219 532

## Description

### Technical field

The invention belongs to the technical field of identification of vehicle situations, in particular emergency situations.

It relates specially a method and a system for evaluating an emergency situation in a vehicle.

### Technological background

The eCall system (for *"emergency Call"*) in a vehicle is a system that is able to establish a communication with emergency services automatically or manually if the vehicle is involved in an incident or an accident. This communication to the emergency services transmits location information and can also include details e.g. on whether the vehicle's airbags have been deployed. This communication aims at determining the level of emergency regarding the vehicle and its passengers.

A method to assess the emergency level is to evaluate the situation inside the passenger compartment. If the driver or a passenger does not respond, a solution can be to observe the situation within the passenger compartment, for example based on visual data of the passenger compartment. The document WO 2022/046541 A1 discloses a a method for evaluating an emergency situation in a vehicle, which includes emitting a sound from a speaker device, detecting the signal via a microphone device, determining acoustic parameters, and comparing them to predefined parameters.

However, such data are not necessarily available. Furthermore, such analysis requires the collection of personal data that are sent to external devices (such as the emergency centre). Therefore, privacy considerations have to be taken into account.

### Summary of the invention

The invention proposes to improve the evaluation of an emergency situation when a vehicle is involved in an incident or an accident.

According to an aspect of the invention, the invention relates to a method for evaluating an emergency situation in a vehicle according to claim 1.

Thanks to the invention, the method allows determining the emergency situation of the vehicle based only on an acoustic analysis of the propagated signal. There is, for example, no need to use images of the vehicle. Furthermore, the comparison with predetermined acoustic parameters that are stored in the vehicle, and which correspond to normal driving conditions allows an accurate determination of the level of emergency. The emergency is then able to adapt the emergency response.

Other advantageous features of the electronic assembly are the following ones:
- the vehicle comprising a module for cancelling echoes from the propagation of the emitted sound in the passenger compartment, said module is used to determine the acoustic parameters of the detected signal;
- the emitted sound is an acoustic test signal;
- the acoustic test signal is formed from a white noise;
- the acoustic test signal is formed from a sweep signal;
- the acoustic test signal is formed from a maximum length sequence signal ;
- the method further comprises a step of transmitting, to an emergency centre, an acoustic function based on determined acoustic parameters regarding the identified situation;
- the acoustic parameters comprise a reverberation time of the received signal in the passenger compartment or an eigenfrequency of the received signal or the power of the detected signal;
- the method further comprises a preliminary step of storing the predetermined acoustic parameters corresponding to normal conditions of driving;
- the emitted sound is a presence signal configured to detect the presence of an occupant of the vehicle, the detected signal corresponding to a response signal associated with said occupant;
- the method further comprises a step of increasing the volume of the presence signal so that the response signal can be heard from outside of the vehicle; and
- the step of comparing comprises the comparison, at least at a predetermined frequency, of a magnitude and a phase of the response acoustic parameters and a magnitude and a phase of the predetermined acoustic parameters.

The invention also relates to a system for evaluating an emergency situation in a vehicle according to claim 11.

The different characteristics, variants, and embodiments of the invention may be combined with each other in various combinations insofar as they are not incompatible or exclusive of each other.

### Description of the drawings

The following description with reference to the accompanying drawings will make it clear what the invention consists of and how it can be achieved. The invention is not limited to the embodiments illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 shows a vehicle equipped with a system for evaluating an emergency situation according to the invention,
- Figure 2 schematically represents an example of the system for evaluating an emergency situation according to the invention,
- Figure 3 represents an exemplary flowchart of a method for evaluating an emergency situation according to the invention,
- Figure 4 represents an exemplary flowchart of a preliminary method for evaluating predetermined acoustic parameters associated with predetermined specific situations, and
- Figure 5 shows an exemplary graph comparing the magnitude of response acoustic parameters and the magnitude of predetermined acoustic parameters according to the invention.

It should be noted that in these figures, the structural and/or functional elements common to the different embodiments may have the same references.

### Description of embodiments

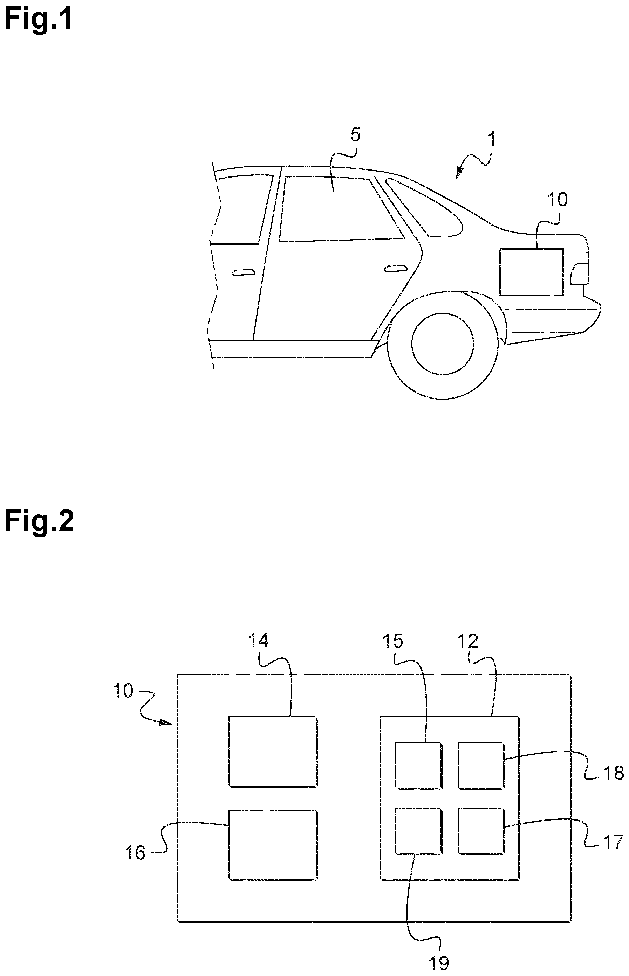

Figure 1 shows a vehicle 1 in which the present invention is implemented.

The vehicle 1 comprises a passenger compartment 5 which corresponds to the space defined in the vehicle 1 and intended for the seating of the driver and passengers.

In a classic way, the vehicle 1 also comprises windows, a dashboard, a steering wheel or an air conditioning system (which are not represented in Figure 1).

As represented in Figure 1, the vehicle 1 comprises a system 10 for evaluating an emergency situation (also noted "system 10" in the following). Figure 2 shows an example of such a system 10.

The system 10 comprises a control unit 12, a speaker device 14 and a microphone device 16.

The speaker device 14 comprises at least one loudspeaker. This loudspeaker can for example be the one that is usually used in the vehicle to play music in the passenger compartment 5 and/or reproduce the voice of an incoming call.

The loudspeaker is located in the passenger compartment 5. It is for example situated in an internal part of the doors of the vehicle. Preferentially, several loudspeakers are located in the passenger compartment 5, for example at the front and at the rear of the passenger compartment 5.

The speaker device 14 is configured to emit a sound in the passenger compartment 5. Depending on the properties of the emitted sound (such as the volume of the emitted sound), the speaker device 14 can be configured to emit the sound so that it can also propagate outside the vehicle 1.

The microphone device 16 comprises at least one microphone. The microphone is located in the passenger compartment 5. It is for example located in an area of the dashboard of the vehicle 1 close to the steering wheel (in order to be close to the driver of the vehicle 1).

The microphone device 16 is configured to receive sound propagating in the vehicle 1. It is also configured to receive the sound that is propagating near but outside of the vehicle 1, in particular when windows are opened or broken.

As represented in Figure 2, the system 10 also comprises the control unit 12. The control unit 12 comprises a processor 15, a memory 17, a communication unit 18 and a location unit 19.

The location unit 19 comprises here a GNSS (for "Global navigation satellite system") sensor, such as a GPS (for "Global Positioning System") sensor. This location unit 19 is configured to determine the location of the vehicle 1 while the vehicle 1 is moving.

In a variant, the location unit can be located in the vehicle but outside of the system 10.

The communication unit 18 is configured to establish a communication, for example a wireless communication, with services that are outside of the vehicle 1.

As an example, the communication unit 18 is configured to communicate with emergency services via an eCall process as presented previously.

The control unit 12, and more particularly the processor 15 of the control unit 12, is configured to control the different components in the vehicle 1, for example the communication unit 18, the microphone device 16 and the speaker device 14. The control unit 12 is also configured to receive and process data acquired by the different sensors (for example coming from the location unit 19).

The control unit 12 also comprises the memory 17 which stores data, such as predetermined acoustic parameters which are described in the following.

The memory 17 of the control unit 12 also stores computer program code instructions adapted to perform the operation and functions of the modules (such as a module for cancelling echoes as introduced in the following) and units, when the concerned program code instructions are executed by the processor 15.

More particularly, the memory 17 of the control unit 12 stores computer programs comprising instructions, whose execution enables the processor 15 of the control unit 12 to implement the method for evaluating an emergency situation in the vehicle 1 as described in the following.

In the context of the present invention, it is assessed that the vehicle 1 is involved in an incident or an accident. The present invention thus aims at evaluating the emergency situation in which is the vehicle 1 (and the driver and passengers) in order to adapt the emergency response to be provided. As described more in details in the following, the evaluation of the emergency situation of the vehicle 1 relies here on an acoustic analysis of a signal propagating in the vehicle 1.

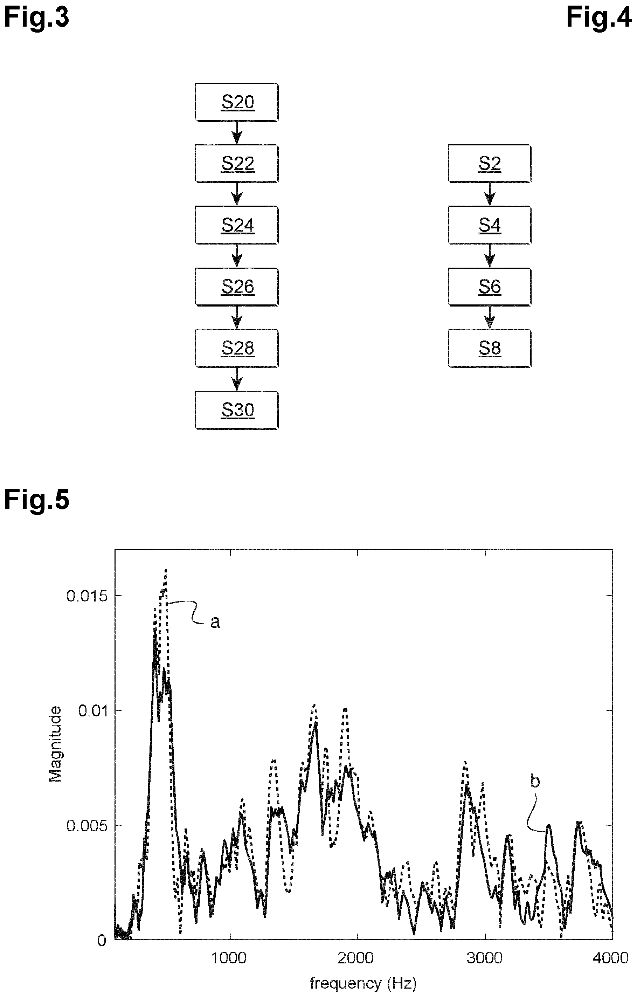

Figure 3 is an exemplary flowchart of a method for evaluating an emergency situation implemented in the context previously described.

Prior to the execution of this method, a preliminary method is executed in order to determine predetermined acoustic parameters.

In this description, "acoustic parameter" refers to the parameters that can characterise the propagation of an acoustic signal. As an example, the acoustic parameters comprise the magnitude or the phase of the acoustic signal that propagates. The acoustic parameters can also comprise the power of the acoustic signal or the eigenfrequency of the acoustic signal or the reverberation time of the acoustic signal during its propagation.

This preliminary method aims at determining predetermined acoustic parameters corresponding to the propagation of a signal in predetermined specific conditions. These predetermined specific conditions correspond here to different situations of the vehicle 1 in normal conditions of driving. The expression "normal conditions of driving" refers here to situations without incident or accident for the vehicle 1.

In order to define such predetermined specific conditions, the number of passengers in the vehicle can vary, the options (heating, air conditioning, ...) used in the passenger compartment can be on or off, the windows can be opened or closed, etc. Each configuration that can be used in normal conditions of driving corresponds to a predetermined specific condition (as defined in the present invention).

The preliminary method is executed for each possible predetermined specific condition. In practice, the preliminary method is for example implemented before the vehicle is put into service. Preferably, this preliminary method is executed after the manufacturing of the vehicle 1, and for example prior to the delivery of vehicle 1.

As an alternative, the predetermined acoustic parameters can change while the vehicle is operating. The preliminary method can thus be implemented during the operation of the vehicle.

Figure 4 represents an exemplary flowchart of the preliminary method for evaluating predetermined acoustic parameters associated with the predetermined specific situations as introduced previously. In the following, the preliminary method is described considering one predetermined specific condition for the vehicle 1. However, this preliminary method is executed in the same way for all the predetermined specific conditions.

As shown in Figure 4, the preliminary method begins at step S2. During this step S2, the control unit 12 controls the emission, from the speaker device 14, of a test sound. The test sound is for example a white noise. It can be a continuous or a hashed white noise. As an alternative, the test sound can be formed from a sweep signal. As another alternative, the test sound can be formed from a maximum length sequence (or MLS) signal.

The test sound then propagates in the passenger compartment 5. At step S4, the control unit 12 detects a signal corresponding to the emitted test sound as received by the microphone device 16.

The control unit 12 then determines the acoustic parameters (also named predetermined acoustic parameters as they correspond to a predetermined specific condition for the vehicle 1) of the detected signal (step S6). In other words, at step S6, the control unit 12 analyses the detected signal in order to extract the acoustic features of this detected signal. In practice, this analysis is for example carried out by comparing the detected signal to the test sound emitted at step S2.

At the end of step S6, the control unit 12 has thus determined the predetermined acoustic parameters associated with the considered predetermined specific situation of the vehicle 1.

At step S8, the memory 17 stores the predetermined acoustic parameters determined at step S6.

Finally, before the vehicle 1 is operated, the memory 17 of the control unit 12 stores all the predetermined acoustic parameters respectively corresponding to each predetermined specific situation.

The method for evaluating an emergency situation in the vehicle 1 is implemented when the vehicle is in operation. More particularly, this method begins at step S20 (figure 3) when the control unit 12 detects that an incident or an accident may have occurred. For example, the control unit 12 detects that the vehicle's airbags have been deployed. In this case, the method aims at identifying the situation and its level of emergency in order to transmit accurate information to the emergency centre. This emergency centre is then able to adapt the emergency response.

In order to identify the situation of the vehicle 1 after the incident or the accident, the method comprises step S22. During this step S22, the control unit 12 controls the emission, from the speaker device 14, of a sound.

In practice, the sound of step S22 is an acoustic test sound. Preferably, this acoustic sound is the same as the one used during the preliminary method (as described previously).

This acoustic test sound is for example a white noise. It can be a continuous or a hashed white noise.

As an alternative, the acoustic test sound can be formed from a sweep signal. As another alternative, the acoustic test sound can be formed from a maximum length sequence (or MLS) signal.

The emitted sound then propagates in the passenger compartment 5.

At step S24, the control unit 12 detects a signal corresponding to the emitted sound as received by the microphone device 16. The detected signal corresponds to the response associated with the emitted sound. In other words, the detected signal corresponds to the sound as received by the microphone device 16 and resulting from the propagation of the emitted sound in the passenger compartment 5.

The control unit 12 then determines the acoustic parameters of the detected signal (step S26). In other words, at step S26, the control unit 12 analyses the detected signal in order to extract the acoustic features of this detected signal. In practice, in a similar way as implemented during the preliminary method, this analysis is for example carried out by comparing the detected signal to the test sound emitted at step S22.

As represented in Figure 3, the method then comprises step S28. During this step, the control unit 12 compares the acoustic parameters determined at step S26 to the predetermined acoustic parameters (determined during the preliminary method and corresponding to normal driving conditions).

In practice, at step S28, the control unit 12 for example compares, at a given frequency, the magnitude and/or the phase of the determined acoustic parameters (associated with the incident or accident) respectively with the magnitude and/or the phase of the predetermined acoustic parameters (in normal driving conditions).

Figure 5 shows an example of such a comparison. In this Figure, graph a shows the variation of the magnitude, as a function of the frequency, of the detected signal in normal driving conditions. Graph b shows the variation of the magnitude, as a function of the frequency, of the detected signal when an incident or accident occurs. As an example, at a frequency of 500Hz, there is a significant difference between the magnitude of the detected signal in normal driving conditions and the magnitude of the detected signal when an incident or accident occurs. This significant difference at this frequency thus reflects that the situation does not correspond to a normal one.

Therefore, at a given frequency, the difference between the predetermined acoustic parameters and the determined acoustic parameters allows identifying the emergency situation. Large differences represent a feature correlating with the severity of the accident. Finally, based on this comparison, the control unit 12 identifies the level of emergency of the situation of the vehicle 1. The identified situation is for example represented by an acoustic function based on the determined acoustic parameters.

A report comprising the identified situation is then transmitted (step S30), for example to an emergency centre. The report comprises here the determined acoustic function.

This report is here transmitted using the communication unit 18. The report is transmitted in the form of a text message or a minimum set of data (or MSD, corresponding to the data format usually used for eCall).

This step S30 then leads to the appropriate response to the emergency centre.

The method described here thus allows determining the emergency situation of the vehicle based only on an acoustic analysis of the propagated signal. There is, for example, no need to use images of the vehicle. Furthermore, the comparison with predetermined acoustic parameters that are stored in the vehicle, and which correspond to normal driving conditions allows an accurate determination of the level of emergency. The emergency is then able to adapt the emergency response (by contacting an ambulance, or a car repair garage, or by doing nothing, if finally, the situation was not an emergency).

According to the claimed invention, the determination of the acoustic parameters of the detected signal is based on an echo cancellation method which is implemented by the module for cancelling echoes from the propagation of the emitted sound in the passenger compartment 5.

When the emitted sound propagates in the passenger compartment 5 (for instance during a conversation with the emergency centre in the frame of an eCall), the microphone device 16 receives a signal and an echo of the emitted sound. This echo is represented by echo acoustic parameters. The module for cancelling echoes comprises adaptive filters that are configured to filter the echo based on its echo acoustic parameters.

As indicated above, the determination of acoustic parameters is made using the module for cancelling echoes (or echo cancellation module) during the emergency situation.

In this embodiment, the preliminary method is thus replaced by the setting up of the module for cancelling echoes, leading to its classical operation during conventional use of the speaker device 14 and microphone device 16 prior to the emergency situation, for instance during a phone call using the speaker device 14 and the microphone device 16.

In this case, the acoustic parameters of the detected signal are thus determined in a more accurate way as the echoes are cancelled at step S26, and thus do not interfere in the determination in the acoustic parameters of the detected signal.

According to another embodiment, the sound emitted at step S22 is for example a presence signal in order to detect the presence of a vehicle occupant (the driver and/or passengers). This presence signal is for instance a voice signal reproduced by the speaker device 14 and corresponding the voice of a person at the emergency centre. In this case, the sound comprises for example a question that the occupant can answer if he hears it.

In this embodiment, the method can optionally comprise a step of increasing the volume of emission of the presence signal so that the response signal can be heard from outside of the vehicle 1. This step thus allows transmitting the presence signal to an occupant who may have left the passenger compartment after the incident or the accident.

In practice, in this embodiment, the detected signal can result from the vehicle occupant, who responded to the emitted sound. This response can be an oral response (i.e. words spoken by the occupant) or a response signal associated with a movement of the occupant (who may not be able to speak but who can move).

## Claims

1. Method for evaluating an emergency situation in a vehicle (1), said vehicle (1) comprising a passenger compartment (5), a speaker device (14), a microphone device (16) and a module for cancelling echoes from the propagation of an emitted sound in the passenger compartment (5), said method comprising steps of:
- emitting, from the speaker device (14), a sound inside the passenger compartment (5),-detecting a signal corresponding to the emitted sound as received by the microphone device (16),
- determining acoustic parameters of the detected signal using the module to cancel the echoes in the detected signal, and
- comparing said acoustic parameters of the detected signal to predetermined acoustic parameters associated with specific situations in order to identify the emergency situation.

2. Method according to claim 1, wherein the emitted sound is an acoustic test signal.

3. Method according to claim 2, wherein the acoustic test signal is formed from a white noise.

4. Method according to claim 2, wherein the acoustic test signal is formed from a sweep signal or a maximum length sequence signal.

5. Method according to any of claims 1 to 4, further comprising a step of transmitting, to an emergency centre, an acoustic function based on determined acoustic parameters regarding the identified situation.

6. Method according to any of claims 1 to 5, wherein the acoustic parameters comprise a reverberation time of the received signal in the passenger compartment (5) or an eigenfrequency of the received signal or the power of the detected signal.

7. Method according to any of claims 1 to 6, further comprising, a preliminary step of storing the predetermined acoustic parameters corresponding to normal conditions of driving.

8. Method according to any of claims 1 to 7, wherein the emitted sound is a presence signal configured to detect the presence of an occupant of the vehicle (1), the detected signal corresponding to a response signal associated with said occupant.

9. Method according to claim 8, further comprising a step of increasing the volume of the presence signal so that the response signal can be heard from outside of the vehicle (1).

10. Method according to any of claims 1 to 9, wherein the step of comparing comprises the comparison, at least at a predetermined frequency, of a magnitude and a phase of the response acoustic parameters and a magnitude and a phase of the predetermined acoustic parameters.

11. System (10) for evaluating an emergency situation in a vehicle (1), said vehicle (1) comprising a passenger compartment (5), a control unit (12), a speaker device (14), a microphone device (16) and a module for cancelling echoes from the propagation of an emitted sound in the passenger compartment (5), said device comprising:
- the speaker device (14) configured to emit a sound inside the passenger compartment (5),
- the control unit (12) configured to detect a signal corresponding to the emitted sound as received by the microphone device (16),
said control unit (12) being also configured to:
- determine acoustic parameters of the detected signal using the module to cancel the echoes in the detected signal, and
- compare said acoustic parameters of the detected signal to predetermined acoustic parameters associated with specific situations in order to identify the emergency situation.

## Patentansprüche

1. Verfahren zum Bewerten einer Notfallsituation in einem Fahrzeug (1), wobei das Fahrzeug (1) eine Fahrgastzelle (5), eine Lautsprechervorrichtung (14) eine Mikrofonvorrichtung (16) und ein Modul zum Unterdrücken von Echos von der Ausbreitung eines abgestrahlten Tonsignals in der Fahrgastzelle (5) umfasst, wobei das Verfahren die folgenden Schritte umfasst:
- Abstrahlen, von der Lautsprechervorrichtung (14), eines Tonsignals innerhalb der Fahrgastzelle (5), -
Erkennen eines Signals, das dem abgestrahlten Tonsignal entspricht, wie es von der Mikrofonvorrichtung (16) empfangen wird,
- Ermitteln von akustischen Parametern des erkannten Signals unter Verwendung des Moduls zum Unterdrücken von Echos in dem erkannten Signal, und
- Vergleichen der akustischen Parameter des erkannten Signals mit vorbestimmten akustischen Parametern, die mit spezifischen Situationen assoziiert sind, um die Notfallsituation zu identifizieren.

2. Verfahren nach Anspruch 1, wobei das abgestrahlte Tonsignal ein akustisches Testsignal ist.

3. Verfahren nach Anspruch 2, wobei das akustische Testsignal aus weißem Rauschen gebildet wird.

4. Verfahren nach Anspruch 2, wobei das akustische Testsignal aus einem Wobbelsignal oder einem Signal einer Sequenz mit maximaler Länge gebildet wird.

5. Verfahren nach einem der Ansprüche 1 bis 4, das ferner einen Schritt eines Sendens einer akustischen Funktion, basierend auf den ermittelten akustischen Parametern hinsichtlich der identifizierten Situation, zu einer Notrufzentrale umfasst.

6. Verfahren nach einem der Ansprüche 1 bis 5, wobei die akustischen Parameter eine Widerhallzeit des empfangenen Signals in der Fahrgastzelle (5) oder eine Eigenfrequenz des empfangenen Signals oder der Leistung des erkannten Signals umfassen.

7. Verfahren nach einem der Ansprüche 1 bis 6, das ferner einen vorausgehenden Schritt eines Speicherns der vorbestimmten akustischen Parameter umfasst, die den normalen Fahrbedingungen entsprechen.

8. Verfahren nach einem der Ansprüche 1 bis 7, wobei das abgestrahlte Tonsignal ein Anwesenheitssignal ist, das konfiguriert ist zum Erkennen der Anwesenheit eines Insassen des Fahrzeugs (1), wobei das erkannte Signal einem Antwortsignal entspricht, das mit dem Insassen assoziiert ist.

9. Verfahren nach Anspruch 8, das ferner einen Schritt eines Erhöhens der Lautstärke des Anwesenheitssignals umfasst, sodass das Antwortsignal von außerhalb des Fahrzeugs (1) gehört werden kann.

10. Verfahren nach einem der Ansprüche 1 bis 9, wobei der Schritt des Vergleichens den Vergleich, bei mindestens einer vorbestimmten Frequenz, einer Größe und einer Phase der akustischen Antwortparameter mit einer Größe und einer Phase der vorbestimmten akustischen Parameter umfasst.

11. System (10) zum Bewerten einer Notfallsituation in einem Fahrzeug (1), wobei das Fahrzeug (1) eine Fahrgastzelle (5), eine Steuereinheit (12), eine Lautsprechervorrichtung (14) eine Mikrofonvorrichtung (16) und ein Modul zum Unterdrücken von Echos von der Ausbreitung eines abgestrahlten Tonsignals in der Fahrgastzelle (5) umfasst, wobei die Vorrichtung umfasst:
- die Lautsprechervorrichtung (14), die konfiguriert ist zum Abstrahlen eines Tonsignals innerhalb der Fahrgastzelle (5),
- die Steuereinheit (12), die konfiguriert ist zum Erkennen eines Signals, das dem abgestrahlten Tonsignal entspricht, wie es von der Mikrofonvorrichtung (16) empfangen wird,
wobei die Steuereinheit (12) auch konfiguriert ist zum:
- Ermitteln von akustischen Parametern des erkannten Signals unter Verwendung des Moduls zum Unterdrücken von Echos in dem erkannten Signal, und
- Vergleichen der akustischen Parameter des erkannten Signals mit vorbestimmten akustischen Parametern, die mit spezifischen Situationen assoziiert sind, um die Notfallsituation zu identifizieren.

## Revendications

1. Procédé d'évaluation d'une situation d'urgence dans un véhicule (1), ledit véhicule (1) comprenant un habitacle (5), un dispositif de haut-parleur (14), un dispositif de microphone (16) et un module pour annuler les échos provenant de la propagation d'un son émis dans l'habitacle (5), ledit procédé comprenant les étapes suivantes :
- émettre, à partir du dispositif de haut-parleur (14), un son à l'intérieur de l'habitacle (5), - détecter un signal correspondant au son émis tel que reçu par le dispositif de microphone (16),
- déterminer des paramètres acoustiques du signal détecté à l'aide du module pour annuler les échos dans le signal détecté, et
- comparer lesdits paramètres acoustiques du signal détecté à des paramètres acoustiques prédéterminés associés à des situations spécifiques de manière à identifier la situation d'urgence.

2. Procédé selon la revendication 1, dans lequel le son émis est un signal de test acoustique.

3. Procédé selon la revendication 2, dans lequel le signal de test acoustique est formé à partir d'un bruit blanc.

4. Procédé selon la revendication 2, dans lequel le signal de test acoustique est formé à partir d'un signal de balayage ou d'un signal de séquence de longueur maximale.

5. Procédé selon l'une quelconque des revendications 1 à 4, comprenant en outre une étape comprenant de transmettre, à un centre d'urgence, une fonction acoustique basée sur des paramètres acoustiques déterminés concernant la situation identifiée.

6. Procédé selon l'une quelconque des revendications 1 à 5, dans lequel les paramètres acoustiques comprennent un temps de réverbération du signal reçu dans l'habitacle (5) ou une fréquence propre du signal reçu ou la puissance du signal détecté.

7. Procédé selon l'une quelconque des revendications 1 à 6, comprenant en outre une étape préliminaire de stockage des paramètres acoustiques prédéterminés correspondant à des conditions normales de conduite.

8. Procédé selon l'une quelconque des revendications 1 à 7, dans lequel le son émis est un signal de présence configuré pour détecter la présence d'un occupant du véhicule (1), le signal détecté correspondant à un signal de réponse associé audit occupant.

9. Procédé selon la revendication 8, comprenant en outre une étape d'augmentation du volume du signal de présence de manière à ce que le signal de réponse puisse être entendu depuis l'extérieur du véhicule (1).

10. Procédé selon l'une quelconque des revendications 1 à 9, dans lequel l'étape de comparaison comprend la comparaison, au moins à une fréquence prédéterminée, d'une amplitude et d'une phase des paramètres acoustiques de réponse et d'une amplitude et d'une phase des paramètres acoustiques prédéterminés.

11. Système (10) d'évaluation d'une situation d'urgence dans un véhicule (1), ledit véhicule (1) comprenant un habitacle (5), une unité de commande (12), un dispositif de haut-parleur (14), un dispositif de microphone (16) et un module pour annuler les échos provenant de la propagation d'un son émis dans l'habitacle (5), ledit dispositif comprenant :
- le dispositif de haut-parleur (14) configuré pour émettre un son à l'intérieur de l'habitacle (5),
- l'unité de commande (12) configurée pour détecter un signal correspondant au son émis tel que reçu par le dispositif de microphone (16),
ladite unité de commande (12) étant également configurée pour :
- déterminer des paramètres acoustiques du signal détecté à l'aide du module pour annuler les échos dans le signal détecté, et
- comparer lesdits paramètres acoustiques du signal détecté à des paramètres acoustiques prédéterminés associés à des situations spécifiques afin d'identifier la situation d'urgence.
